# FASCICULE DE BREVET EUROPEEN

(11) **EP 1 593 912 B1**
(45) Date de publication et mention de la délivrance du brevet: **06.06.2007**
(21) Numéro de dépôt: 05290869.6
(22) Date de dépôt: 19.04.2005
(51) Int. Cl.: F23R 3/28

(54) **Carter de turboréacteur comprenant un conduit de fluide et un dispositif de fixation du conduit de fluide sur le carter de turboréacteur**
Strahlturbinengehäuse und Fluidleitung mit Vorrichtung zum Befestigen der Fluidleitung im Strahlturbinengehäuse
Jet engine casing with fluid conduit and device for attaching the fluid conduit in the jet engine casing

(30) Priorité: 05.05.2004 FR 0404796
(43) Date de publication de la demande: 09.11.2005
(73) Titulaire: SNECMA, 75015 Paris (FR)
(72) Inventeur: Bunel, Jacques, 94260 Fresnes (FR); Roche, Jacques, 87160 St. Sulpice les Feuilles (FR); Ruellan, Frédéric, 77176 Nandy (FR); Henry, Philippe, 77350 Le Mee Sur Seine (FR)
(74) Mandataire: Ramey, Daniel

(56) Documents cités:
- US-B1- 6 354 085

## Description

La présente invention concerne un dispositif de fixation d'un conduit de fluide sur un carter d'un turboréacteur, en particulier d'une rampe d'alimentation en carburant d'un anneau brûleur dans une chambre de postcombustion du turboréacteur.

Le document US-B-6 354 085 décrit un dispositif de fixation d'un conduit dans un orifice d'un carter de turboréacteur, comprenant des moyens du type vis-écrou entre l'extrémité du conduit et l'orifice du carter.

De façon classique, dans un turboréacteur à double flux et chambre de postcombustion, un anneau brûleur est monté sur les extrémités radialement externes de bras accroche-flammes qui sont eux-mêmes fixés sur le carter extérieur de la chambre de postcombustion, et une rampe circulaire d'injection de carburant s'étend à l'intérieur de l'anneau brûleur. Cette rampe circulaire est reliée en plusieurs points à des amenées de carburant sur le carter extérieur de la chambre de postcombustion, par des rampes d'alimentation qui s'étendent radialement entre le carter extérieur et l'anneau brûleur. Ces rampes d'alimentation traversent le flux secondaire du turboréacteur, qui s'écoule entre le carter extérieur et une paroi cylindrique interne délimitant la chambre de postcombustion, à l'intérieur de laquelle s'écoule le flux primaire formé par les gaz d'échappement de la chambre de combustion du turboréacteur et où se trouve l'anneau brûleur. Ces rampes sont en général mises en place et fixées depuis l'intérieur de la chambre de postcombustion.

Il serait intéressant de loger les rampes d'alimentation en carburant de l'anneau brûleur à l'intérieur des parties d'extrémité externe des bras accroche-flammes, pour protéger ces rampes du flux primaire qui est à une température élevée (qui peut atteindre par exemple environ 2000°K en mode postcombustion) et pour ne pas perturber le flux primaire, mais les moyens connus de fixation de ces rampes sur le carter externe comportent des pièces de traversée de paroi qui ont un diamètre relativement important interdisant de les faire passer par l'intérieur des bras accroche-flammes.

En outre, l'espace disponible entre le carter extérieur de la chambre de postcombustion et la paroi cylindrique interne en aval de l'anneau brûleur n'est pas suffisant pour que l'on puisse fixer ces pièces de traversée de paroi sur le carter externe depuis l'intérieur, au moyen d'outils engagés à l'intérieur du carter externe en aval de l'anneau brûleur.

La présente invention a pour but d'apporter une solution simple, efficace et économique à ce problème.

Elle propose à cet effet un carter de turboréacteur, comprenant un conduit de fluide et un dispositif de fixation du conduit de fluide dans un orifice du carter, le dispositif comprenant des moyens du type vis - écrou entre l'extrémité du conduit et l'orifice du carter, caractérisé en ce qu'il comprend une bague annulaire vissée dans l'orifice du carter et dont une extrémité vient en appui sur des moyens de butée rapportés sur le conduit, et un écrou vissé sur l'extrémité du conduit jusqu'à serrer la bague sur les moyens de butée du conduit pour fixer celui-ci sur le carter.

Un tel dispositif de fixation est a priori utilisable pour fixer l'extrémité du conduit sur le carter depuis l'extérieur ou depuis l'intérieur du carter externe. Dans le cas où l'espace disponible à l'intérieur du carter n'est pas suffisant pour une manipulation de la bague et de l'écrou précités, cette bague et cet écrou sont avantageusement vissés depuis l'extérieur du carter externe dans l'orifice du carter et sur l'extrémité du conduit, respectivement.

De plus, les moyens de butées prévus sur le conduit sont avantageusement rapportés sur celui-ci depuis l'extérieur du carter externe, avant vissage de la bague et de l'écrou précités, ce qui permet de mettre en place le conduit depuis l'intérieur du carter sans difficulté, et par exemple de faire passer une rampe d'alimentation en carburant d'un anneau brûleur à l'intérieur d'un bras accroche-flammes depuis l'intérieur de la chambre de postcombustion.

Dans un mode de réalisation de l'invention, les moyens de butée précités comprennent une rondelle engagée sur l'extrémité du conduit et venant en appui sur un épaulement dudit conduit.

De préférence, la rondelle comprend un orifice central tronconique engagé sur une surface tronconique correspondante du conduit.

L'appui des deux surfaces tronconiques l'une sur l'autre permet de former une liaison étanche par serrage de la bague sur la rondelle du conduit.

Selon une autre caractéristique de l'invention, l'écrou est vissé sur l'extrémité du conduit à l'intérieur de la bague et a un diamètre externe inférieur au diamètre interne de la bague.

Le jeu ainsi formé entre la bague et l'écrou évite de mettre l'extrémité du conduit en contrainte jusqu'à la fin du serrage de l'écrou.

Avantageusement, l'écrou vient en appui à son extrémité interne sur un rebord annulaire interne de la bague, qui est formé à l'extrémité interne de la bague et qui vient lui-même en appui sur la rondelle montée sur l'extrémité du conduit.

Selon une autre caractéristique de l'invention, l'extrémité externe de la bague comporte un rebord annulaire externe venant s'appliquer sur le carter autour de l'orifice quand la bague est vissée dans l'orifice.

Cela permet de définir de façon positive une position finale de la bague dans l'orifice du carter, et une position finale du conduit dans cet orifice après vissage de l'écrou.

Avantageusement, la partie filetée de l'orifice dans laquelle est vissée la bague est formée par une douille engagée dans l'orifice du carter et retenue par butée axiale dans cet orifice.

Ceci permet de limiter les opérations d'usinage du carter externe du turboréacteur et de changer facilement la douille lorsque son filetage est abîmé au lieu de refaire le filetage de l'orifice du carter.

De préférence, la bague a un filetage extérieur avec un pas à gauche et l'écrou a un filetage intérieur avec un pas à droite.

En fonctionnement, les vibrations peuvent contribuer au dévissage de la bague et/ou de l'écrou. Cette inversion d'un filetage limite le dévissage de l'un par rapport à l'autre.

Selon un mode de réalisation préféré de l'invention, ladite rondelle est retenue dans une cage formée à l'extrémité interne de la bague.

Ce mode de réalisation assure automatiquement le montage correct de la rondelle sur l'épaulement de l'extrémité du conduit et rend la rondelle imperdable.

Avantageusement, des moyens de blocage en rotation sont prévus sur la bague et l'écrou et comprennent par exemple un fil-frein engagé dans des trous des extrémités correspondantes de la bague et de l'écrou.

De préférence, l'extrémité du conduit comprend un orifice axial de passage de fluide à section non circulaire, par exemple hexagonale, pour la réception d'un outil de blocage du conduit en rotation par rapport au carter, pendant le vissage de l'écrou.

On peut ainsi éviter de faire tourner ce conduit dans l'orifice du carter et de le mettre en contrainte à la fin de vissage de l'écrou.

D'autres avantages et caractéristiques de l'invention apparaîtront à la lecture de la description suivante faite à titre d'exemple non limitatif et en référence aux dessins annexés dans lesquels :
- la figure 1 est une vue schématique partielle en coupe axiale d'une chambre de postcombustion d'un turboréacteur à double flux comprenant un dispositif selon l'invention pour la fixation d'une rampe d' alimentation en carburant d'un anneau brûleur ;
- la figure 2 est une vue schématique agrandie de la figure 1 représentant le dispositif selon l'invention ;
- la figure 3 est une vue schématique en coupe axiale d'une variante de réalisation du dispositif selon l'invention.

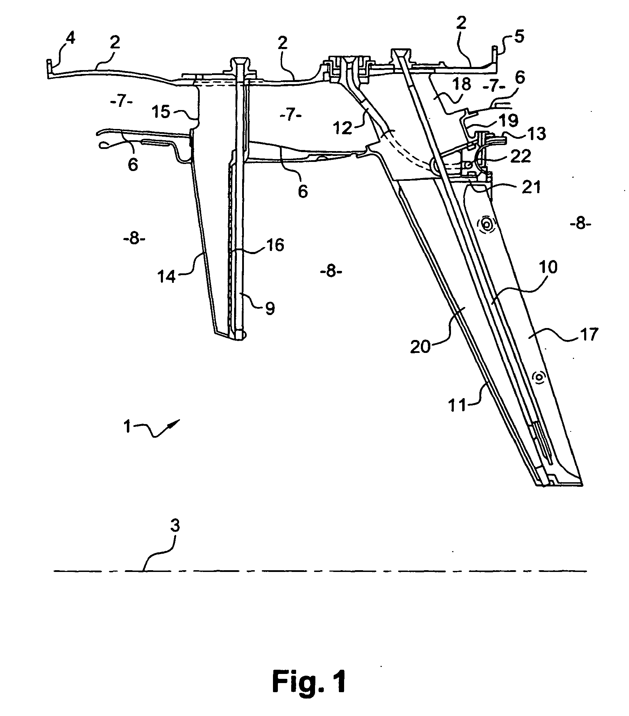

On se réfère d'abord à la figure 1, représentant partiellement une chambre de postcombustion 1 d'un turboréacteur à double flux, disposée en aval de la turbine du turboréacteur.

La chambre de postcombustion 1 comprend un carter externe sensiblement cylindrique 2 d'axe 3 qui comporte à son extrémité amont une bride annulaire 4 radialement externe de fixation sur le carter externe de la turbine, et à son extrémité aval une bride annulaire 5 radialement externe de fixation sur un carter externe de tuyère.

La chambre de postcombustion 1 comprend un carter interne annulaire 6 coaxial au carter externe 2.

La surface externe du carter interne 6 et la surface interne du carter externe 2 délimitent un espace annulaire 7 s'étendant d'amont en aval, dans lequel s'écoule le flux froid ou flux secondaire du turboréacteur, généré par une soufflante à l'amont du turboréacteur et servant à augmenter la poussée et à ventiler des composants du turboréacteur.

Le carter interne 6 délimite un espace cylindrique 8 s'étendant d'amont en aval, dans lequel s'écoule le flux chaud ou flux primaire du turboréacteur, qui est constitué par les gaz d'échappement de la chambre de combustion du turboréacteur.

La chambre de postcombustion 1 permet d'augmenter la poussée du turboréacteur, par injection d'air et de carburant dans le flux primaire et combustion du mélange dans la chambre de postcombustion 1.

L'injection de carburant est assurée par des rampes 9 d'alimentation en carburant en amont de la chambre de post combustion 1, des rampes 10 d'alimentation en carburant s'étendant dans des bras accroche-flammes 11 en aval des rampes 9, et des rampes 12 d'alimentation en carburant d'un anneau brûleur 13 porté par les bras accroche-flammes 11.

Les rampes d'alimentation 9, 10 comprennent des trous de pulvérisation de carburant orientés vers l'aval, sur leur partie radialement interne s'étendant dans le flux primaire.

Les rampes d'alimentation 9, 10, 12 sont de préférence axialement alignées les unes par rapport aux autres et sont régulièrement réparties sur la circonférence du carter externe 4. L'alignement axial permet de limiter les turbulences du flux secondaire et du flux primaire et donc de réduire les pertes de charge. Les rampes d'alimentation 9, 10, 12 sont par exemple au nombre de neuf dans la chambre de postcombustion 1.

Les rampes d'alimentation 9 sont sensiblement perpendiculaires à l'axe 3 et sont logées dans des dièdres creux 14 dont l'arête est orientée vers l'amont et s'étend depuis le carter interne 6 dans la zone d'écoulement du flux primaire. La partie radialement extérieure de l'arête du dièdre 14 qui s'étend dans le flux secondaire est découpée pour former un orifice 15.

En fonctionnement, une partie du flux secondaire est captée par l'orifice 15 dans le dièdre 14 et redistribuée dans le flux primaire au moyen de trous 16 prévus dans une paroi radiale s'étendant en amont de la rampe 9 et la protégeant du flux primaire. La température du flux secondaire est de l'ordre de 450°K par exemple, et celle du flux primaire peut varier entre 1100°K et 2000°K selon le régime de fonctionnement du turboréacteur. La circulation du flux secondaire dans les dièdres permet de refroidir les rampes d'alimentation 9 et les dièdres 14, et d'améliorer la pulvérisation du carburant dans le flux primaire.

Les bras accroche-flammes 11 s'étendent radialement autour de l'axe 3, de façon oblique par rapport à celui-ci, leur extrémité radialement interne étant décalée vers l'aval, et ils comprennent une partie radialement externe s'étendant dans le flux secondaire et une partie radialement interne s'étendant dans le flux primaire.

La partie radialement interne des bras 11 est formée d'un dièdre creux dont l'arête est orientée vers l'amont et qui est fermé vers l'aval par une paroi incurvée 17 formant écran de protection thermique de la rampe 10 d'alimentation en carburant qui s'étend dans le bras 11 depuis le carter externe 2.

La partie radialement externe de l'arête du dièdre du bras 11 est découpée pour former une ouverture de captation d'une partie du flux secondaire et les deux parois latérales 18 de cette partie du dièdre sont fixées sur le carter externe 2.

L'espace annulaire d'écoulement du flux secondaire est réduit sensiblement de moitié en dimension radiale en aval des bras accroche-flammes 11 par une paroi annulaire 19 montée entre le carter interne 6 et l'anneau brûleur 13, de sorte qu'en fonctionnement, une partie du flux secondaire s'écoule à l'intérieur de chaque bras 11 dans un caisson de ventilation 20 s'étendant le long de la rampe d'alimentation 10 en amont de celle-ci, le caisson 20 comprenant sur toute sa longueur des trous alignés avec la rampe d'alimentation 10.

L'anneau brûleur 13 a une section axiale sensiblement en U dont l'ouverture est orientée vers l'aval et est monté dans le flux primaire entre la paroi 19 précitée et un rebord annulaire aval 21 d'extrémité des bras 11.

Dans l'anneau brûleur 13 est montée une rampe circulaire 22 d'alimentation en carburant présentant des trous de pulvérisation orientés vers l'aval, et reliée aux rampes 12 d'alimentation sensiblement radiales qui s'étendent dans les parties radialement externes des bras 11 et qui sont fixées au carter externe 2 par des dispositifs de fixation selon l'invention.

Ces dispositifs de fixation sont mis en place depuis l'extérieur du carter 2 et ne nécessitent pas l'utilisation d'outils dans la zone d'écoulement du flux secondaire entre le carter externe 2 et le carter interne 6 en aval des bras accroche-flammes 11.

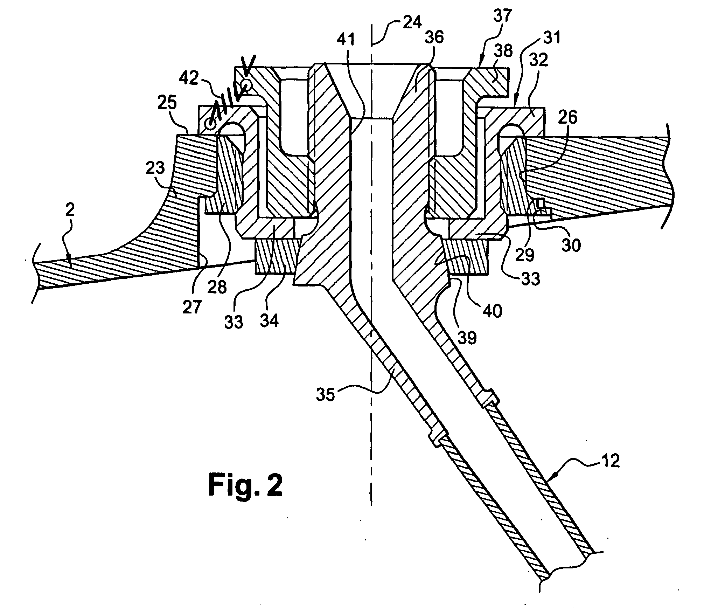

On se réfère maintenant à la figure 2, qui est une vue à plus grande échelle d'un dispositif de fixation selon l'invention.

Dans cette figure, l'orifice de fixation de la rampe 12 sur le carter est formé dans un bossage 23 de ce carter, ce bossage ayant un axe 24 perpendiculaire à l'axe 3 du carter et une face extérieure 25 plane et perpendiculaire à l'axe 24.

L'orifice formé dans le bossage 23 comprend une partie externe constituée par un alésage cylindrique 26 qui débouche dans un chambrage 27 de plus grand diamètre s'étendant jusqu'à la face interne du carter 2.

Une douille cylindrique 28 est montée ajustée dans l'alésage 26 depuis l'intérieur du carter et comporte à son extrémité interne un rebord annulaire 29, qui s'appuie sur le fond du chambrage 27 et qui comprend des moyens, tels qu'un ergot 30, d'immobilisation en rotation dans le chambrage 27.

La surface cylindrique interne de la douille 28 est filetée pour le vissage d'une bague 31 qui comporte à son extrémité externe un rebord annulaire 32 destiné à venir s'appliquer sur la face extérieure 25 du bossage 23 et à son extrémité interne un rebord annulaire 33 orienté vers l'axe de la bague et formant une surface d'appui sur une rondelle 34 enfilée sur un embout 35 monté à l'extrémité de la rampe 12.

L'embout 35 est coudé dans cet exemple de réalisation et comporte une partie d'extrémité cylindrique droite 36 filetée extérieurement, qui reçoit un écrou cylindrique 37 dont l'extrémité externe comporte un rebord annulaire 38 orienté vers l'extérieur et ayant un diamètre extérieur qui est ici légèrement supérieur au diamètre interne de la bague 31.

La partie filetée 36 de l'embout se termine, du côté de la rampe 12, au voisinage d'une surface tronconique 39 formée sur l'embout 35 et destinée à former un siège d'appui d'une surface tronconique 40 interne de la rondelle 34, les troncs de cône ayant leur grande base du côté interne et leur petite base du côté externe, par rapport au carter 2 du turboréacteur.

Le diamètre extérieur de la rondelle 34 est inférieur au diamètre interne de la douille 28 et supérieur au diamètre interne du rebord 33 de la bague 31.

La longueur axiale de l'écrou 37 est déterminée pour qu'en position vissée représentée en figure 2, son extrémité interne soit en appui sur le bord 33 de la bague 31, lui-même en appui sur la rondelle 34 montée sur la surface tronconique 39 de l'embout 35 de la rampe 12, le rebord extérieur 38 de l'écrou 37 étant écarté du rebord 32 de la bague 31.

La surface interne 41 de la partie filetée 36 de l'embout 35 est non - circulaire, par exemple hexagonale, pour l'immobilisation en rotation de l'embout au moyen d'une clé à six pans enfilée dans cette partie 36 de l'embout 35.

Le montage du dispositif de fixation selon l'invention est le suivant :
o la rampe 12 reliée à la rampe circulaire 22 dans l'anneau brûleur 13 s'étend à l'intérieur de la partie d'extrémité externe du bras 11 et l'embout 35 est engagé dans l'alésage 26 du carter 2 ;
o la rondelle 34 est placée depuis l'extérieur du carter 2 sur l'embout 35, par passage dans la douille 28 préalablement mise en place dans l'alésage 26. Il faut que la rondelle 34 soit orientée du bon côté, pour que sa surface tronconique 40 s'applique correctement sur la surface tronconique 39 de l'embout 35;
o la bague 31 est ensuite vissée dans la douille 28, puis l'écrou 37 est vissé sur la partie filetée 36 de l'embout 35. Les positions en fin de vissage sont celles représentées en figure 2.

Le diamètre interne de la partie externe de l'écrou 37, qui n'est pas fileté sur toute sa longueur, est suffisamment grand par rapport au diamètre externe de l'embout 35 pour permettre le raccord de cet embout à des moyens d'amenée de carburant, logés en partie à l'intérieur de l'écrou 37.

Le montage de l'écrou 37 en appui sur le rebord 33 de la bague 31, lui-même en appui sur la rondelle 34 montée sur la surface tronconique 39 de l'embout 35, assure une étanchéité au carburant de l'extérieur vers l'intérieur du carter 2.

Avantageusement, les filetages de la bague 31 et de l'écrou 37 sont inversés, la bague 31 ayant un filetage avec un pas à gauche et l'écrou 37 un filetage avec un pas à droite, pour éviter leur desserrage mutuel sous l'effet des vibrations.

De plus, un fil-frein 42 peut être monté comme représenté dans des trous des rebords 32 et 38 de la bague 31 et de l'écrou 37, pour éviter leur desserrage.

Le maintien de l'embout 35 au moyen d'une clé à six pans engagée dans sa partie filetée 36, évite en fin de serrage un entraînement en rotation de l'embout et une mise en contrainte de la rampe 12.

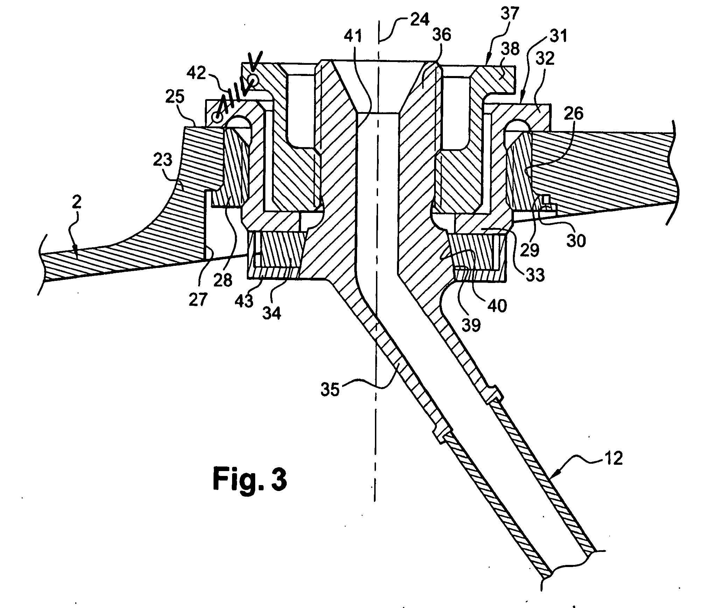

Dans la variante de réalisation de la figure 3, la rondelle 34 est montée à demeure dans une cage formée à l'extrémité interne de la bague 31 par des doigts 43 repliés vers l'axe de la bague 31, ce qui rend la rondelle imperdable et empêche de la monter à l'envers sur la surface tronconique 39 de l'embout 35.

De façon générale, le dispositif selon l'invention permet un montage simple et sûr des rampes 12 sur le carter depuis l'extérieur de celui-ci, les rampes 12 étant alignées axialement avec les rampes 10 qui s'étendent dans les bras accroche-flammes 11 et ne créant pas de perturbation supplémentaire du flux secondaire.

De plus, les rampes 12 sont protégées du flux primaire chaud par les bras accroche-flammes 11, et ne créent pas de perturbation de ce flux primaire.

## Revendications

1. Carter de turboréacteur, comprenant un conduit de fluide et un dispositif de fixation du conduit de fluide dans un orifice (26) du carter (2), le dispositif comprenant des moyens du type vis - écrou entre l'extrémité (35) du conduit et l'orifice (26) du carter (2), comprenant une bague (31) vissée dans l'orifice (26) du carter (2) et dont une extrémité vient en appui sur des moyens de butée (34) rapportés sur le conduit, **caractérisé en ce qu'**il comprend un écrou (37) vissé sur l'extrémité (35) du conduit jusqu'à serrer la bague (31) sur les moyens de butée (34) du conduit pour fixer celui-ci sur le carter (2).

2. Carter de turboréacteur selon la revendication 1, **caractérisé en ce que** les moyens de butée du conduit comprennent une rondelle (34) engagée sur l'extrémité (35) du conduit et venant en appui sur un épaulement dudit conduit.

3. Carter de turboréacteur selon la revendication 2, **caractérisé en ce que** la rondelle (34) comprend un orifice central tronconique engagé sur une surface tronconique (39) correspondante du conduit.

4. Carter de turboréacteur selon l'une des revendications précédentes, **caractérisé en ce que** ladite bague (31) est vissée dans l'orifice (26) du carter (2) depuis l'extérieur de celui-ci et vient en appui par son extrémité interne sur les moyens de butée (34) du conduit.

5. Carter de turboréacteur selon l'une des revendications précédentes, **caractérisé en ce que** l'écrou (37) est vissé sur l'extrémité (35) du conduit depuis l'extérieur du carter (2).

6. Carter de turboréacteur selon l'une des revendications précédentes, **caractérisé en ce que** l'écrou (37) est vissé sur l'extrémité (35) du conduit à l'intérieur de la bague (31) et a un diamètre externe inférieur au diamètre interne de la bague (31).

7. Carter de turboréacteur selon l'une des revendications précédentes, **caractérisé en ce que** l'écrou (37) vient en appui à son extrémité interne sur un rebord annulaire interne (33) de la bague (31).

8. Carter de turboréacteur selon la revendication 7, **caractérisé en ce que** le rebord annulaire interne (33) est formé à l'extrémité interne de la bague (31).

9. Carter de turboréacteur selon l'une des revendications précédentes, **caractérisé en ce que** l'extrémité externe de la bague (31) comporte un rebord annulaire externe (32) venant s'appliquer sur le carter (2) autour de l'orifice (26) quand la bague (31) est vissée dans l'orifice (26).

10. Carter de turboréacteur selon l'une des revendications précédentes, **caractérisé en ce que** la partie filetée de l'orifice (26) dans laquelle est vissée la bague (31) est formée par une douille (28) engagée dans l'orifice (26) du carter (2) et retenue par butée axiale (30) dans cet orifice (26).

11. Carter de turboréacteur selon l'une des revendications précédentes, **caractérisé en ce que** la bague (31) a un filetage extérieur avec un pas à gauche et l'écrou (37) a un filetage intérieur avec un pas à droite.

12. Carter de turboréacteur selon l'une des revendications 2 à 11, **caractérisé en ce que** ladite rondelle (34) est retenue dans une cage (43) formée à l'extrémité interne de la bague (31).

13. Carter de turboréacteur selon l'une des revendications précédentes, **caractérisé en ce que** des moyens de blocage en rotation sont prévus sur la bague (31) et l'écrou (37) et comprennent par exemple un fil (42) engagé dans des trous des extrémités correspondantes de la bague (31) et de l'écrou (37).

14. Carter de turboréacteur selon l'une des revendications précédentes, **caractérisé en ce que** l'extrémité (35) du conduit comprend un orifice axial (41) de passage de fluide à section non circulaire, par exemple hexagonale, pour la réception d'un outil de blocage du conduit en rotation par rapport au carter, pendant le vissage de l'écrou.

15. Carter de turboréacteur selon l'une des revendications précédentes, **caractérisé en ce que** le conduit de fluide est une rampe (12) d'alimentation en carburant d'un anneau brûleur (13) dans une chambre de postcombustion.

16. Turboréacteur, **caractérisé en ce qu'**il comprend un carter selon l'une des revendications précédentes.

## Claims

1. A turbojet casing, comprising a fluid duct and a device for fastening the fluid duct in an orifice (26) of the casing (2), the device comprising screw-and-nut type means between the end (35) of the duct and the orifice (26) of the casing (2), comprising a ring (31) screwed into the orifice (26) of the casing (2) and having one end that comes to bear against abutment means (34) fitted to the duct, the device being **characterized in that** it comprises a nut (37) screwed onto the end (35) of the duct so as to clamp the ring (31) against the abutment means (34) of the duct in order to fasten it to the casing (2).

2. A turbojet casing according to claim 1, **characterized in that** the abutment means of the duct comprise a washer (34) engaged on the end (35) of the duct and coming to bear on a shoulder of said duct.

3. A turbojet casing according to claim 2, **characterized in that** the washer (34) has a frustoconical central orifice engaged on a corresponding frustoconical surface (39) of the duct.

4. A turbojet casing according to any preceding claim, **characterized in that** said ring (31) is screwed into the orifice (26) of the casing (2) from the outside of the casing and has its inner end coming to bear against the abutment means (34) of the duct.

5. A turbojet casing according to any preceding claim, **characterized in that** the nut (37) is screwed on the end (35) of the duct from outside the casing (2).

6. A turbojet casing according to any preceding claim, **characterized in that** the nut (37) is screwed onto the end (35) of the duct inside the ring (31) and has an outside diameter smaller than the inside diameter of the ring (31) .

7. A turbojet casing according to any preceding claim, **characterized in that** the nut (37) has its inner end coming to bear against an inner annular rim (33) of the ring (31).

8. A turbojet casing according to claim 7, **characterized in that** the inner annular rim (33) is formed at the inner end of the ring (31).

9. A turbojet casing according to any preceding claim, **characterized in that** the outer end of the ring (31) has an outwardly-directed annular rim (32) coming to bear against the casing (2) around the orifice (26) when the ring (31) is screwed into the orifice (26).

10. A turbojet casing according to any preceding claim, **characterized in that** the threaded portion of the orifice (26) into which the ring (31) is screwed is formed by a bushing (28) engaged in the orifice (26) of the casing (2) and held by axial abutment (30) in said orifice (26).

11. A turbojet casing according to any preceding claim, **characterized in that** the ring (31) has an outside thread with a left-hand pitch and the nut (37) has an inside thread with a right-hand pitch.

12. A turbojet casing according to any one of claims 2 to 11, **characterized in that** said washer (34) is held in a cage (43) forming the inner end of the ring (31).

13. A turbojet casing according to any preceding claim, **characterized in that** means are provided on the ring (31) and the nut (37) for preventing them from turning, said means comprising, for example, a wire (42) engaged in corresponding end holes of the ring (31) and the nut (37).

14. A turbojet casing according to any preceding claim, **characterized in that** the end (35) of the duct includes an axial orifice (41) for passing fluid that has a section that is not circular, for example that is hexagonal, in order to receive a tool for preventing the duct from turning relative to the casing while the nut is being tightened.

15. A turbojet casing according to any preceding claim, **characterized in that** the fluid duet is a ramp (12) for feeding fuel to a burner ring (13) in an after-burner chamber.

16. A turbojet, **characterized in that** it comprises a casing according to any preceding claim.

## Patentansprüche

1. Turbotriebwerksgehäuse mit einer Fluidleitung und einer Befestigungsvorrichtung zur Befestigung der Fluidleitung in einer Öffnung (26) des Gehäuses (2), wobei die Vorrichtung Mittel wie Schrauben/Muttern zwischen dem Ende (35) der Leitung und der Öffnung (26) des Gehäuses (2) umfasst, sowie mit einem Ring (31), der in der Öffnung (26) des Gehäuses (2) eingeschraubt ist, und dessen eines Ende in Anlage an Anschlagmitteln (34) kommt, welche an der Leitung angebaut sind,
**dadurch gekennzeichnet,**
**dass** es eine Mutter (37) aufweist, die auf das Ende (35) der Leitung aufgeschraubt ist, bis sie den Ring (31) gegen die Anschlagmittel (34) der Leitung presst, um diese an dem Gehäuse (2) zu befestigen.

2. Turbotriebwerksgehäuse nach Anspruch 1,
**dadurch gekennzeichnet,**
**dass** die Anschlagmittel der Leitung eine Scheibe (34) umfassen, die sich an dem Ende (35) der Leitung in Eingriff befindet und an einem Absatz dieser Leitung in Anlage kommt.

3. Turbotriebwerksgehäuse nach Anspruch 2,
**dadurch gekennzeichnet,**
**dass** die Scheibe (34) eine kegelstumpfförmige, zentrale Öffnung aufweist, die sich an einer entsprechenden kegelstumpfförmigen Oberfläche (39) der Leitung in Eingriff befindet.

4. Turbotriebwerksgehäuse nach einem der vorherigen Ansprüche,
**dadurch gekennzeichnet,**
**dass** der genannte Ring (31) von außen in die Öffnung (26) des Gehäuses (2) eingeschraubt ist und mit seinem inneren Ende an den Anschlagmitteln (34) der Leitung in Anlage kommt.

5. Turbotriebwerksgehäuse nach einem der vorherigen Ansprüche,
**dadurch gekennzeichnet,**
**dass** die Mutter (37) von außerhalb des Gehäuses (2) auf das Ende (35) der Leitung aufgeschraubt ist.

6. Turbotriebwerksgehäuse nach einem der vorherigen Ansprüche,
**dadurch gekennzeichnet,**
**dass** die Mutter (37) weiter innen als der Ring (31) auf das Ende (35) der Leitung aufgeschraubt ist und einen Außendurchmesser aufweist, der kleiner ist als der Innendurchmesser des Rings (31).

7. Turbotriebwerksgehäuse nach einem der vorherigen Ansprüche,
**dadurch gekennzeichnet,**
**dass** die Mutter (37) mit ihrem inneren Ende an einem inneren ringförmigen Rand (33) des Rings (31) in Anlage kommt.

8. Turbotriebwerksgehäuse nach Anspruch 7,
**dadurch gekennzeichnet,**
**dass** der innere ringförmige Rand (33) am inneren Ende des Rings (31) ausgeführt ist.

9. Turbotriebwerksgehäuse nach einem der vorherigen Ansprüche,
**dadurch gekennzeichnet,**
**dass** das äußere Ende des Rings (31) einen äußeren ringförmigen Rand (32) aufweist, der sich an dem Gehäuse (2) um die Öffnung (26) herum anlegt, wenn der Ring (31) in die Öffnung (26) eingeschraubt ist.

10. Turbotriebwerksgehäuse nach einem der vorherigen Ansprüche,
**dadurch gekennzeichnet,**
**dass** der mit Gewinde versehene Teil der Öffnung (26), in den der Ring (31) eingeschraubt ist, von einer Hülse (28) gebildet wird, die sich in der Öffnung (26) des Gehäuses (2) in Eingriff befindet und durch einen axialen Anschlag (30) in dieser Öffnung (26) festgehalten wird.

11. Turbotriebwerksgehäuse nach einem der vorherigen Ansprüche,
**dadurch gekennzeichnet,**
**dass** der Ring (31) ein Außengewinde mit Linksgang aufweist und die Mutter (37) ein Innengewinde mit Rechtsgang aufweist.

12. Turbotriebwerksgehäuse nach einem der Ansprüche 2 bis 11,
**dadurch gekennzeichnet,**
**dass** die Scheibe (34) in einem Käfig (43) festgehalten wird, der am inneren Ende des Rings (31) ausgebildet ist.

13. Turbotriebwerksgehäuse nach einem der vorherigen Ansprüche,
**dadurch gekennzeichnet,**
**dass** an dem Ring (31) und der Mutter (37) Drehblockiermittel vorgesehen sind, die beispielsweise aus einem Draht (42) bestehen, der sich in Löchern der entsprechenden Enden des Rings (31) und der Mutter (37)) in Eingriff befindet.

14. Turbotriebwerksgehäuse nach einem der vorherigen Ansprüche,
**dadurch gekennzeichnet,**
**dass** das Ende (35) der Leitung eine axiale Fluidurchlassöffnung (41) mit nicht kreisförmigem, beispielsweise hexagonalem Querschnitt für die Aufnahme eines Werkzeugs aufweist, um die Leitung während des Aufschraubens der Mutter gegenüber dem Gehäuse gegen die Drehbewegung zu blockieren.

15. Turbotriebwerk nach einem der vorherigen Ansprüche,
**dadurch gekennzeichnet,**
**dass** die Fluidleitung eine Zuführleitung (12) zur Zuführung von Brennstoff zu einem Brennerring (13) in einer Nachverbrennungskammer ist.

16. Turbotriebwerksgehäuse,
**dadurch gekennzeichnet,**
**dass** es ein Gehäuse nach einem der vorherigen Ansprüche aufweist.
